Europäisches Patentamt

European Patent Office

Office européen des brevets

(19)

(11) Numéro de publication: **0 222 632**
**B1**

(12) # FASCICULE DE BREVET EUROPEEN

(45) Date de publication du fascicule du brevet:
**17.11.88**

(51) Int. Cl.⁴: **B 60 N 1/00**

(21) Numéro de dépôt: **86402141.5**

(22) Date de dépôt: **01.10.86**

(54) **Nouveau support de siège pour véhicule de transport en commun et siège équipé de ce support.**

(30) Priorité: **01.10.85 FR 8514526**

(43) Date de publication de la demande:
**20.05.87 Bulletin 87/21**

(45) Mention de la délivrance du brevet:
**17.11.88 Bulletin 88/46**

(84) Etats contractants désignés:
**AT BE CH DE ES GB GR IT LI NL SE**

(56) Documents cités:
**FR - A - 2 374 185**
**GB - A - 1 198 987**
**US - A - 3 619 006**
**US - A - 3 951 454**
**US - E - 29 271**

(73) Titulaire: **ETABLISSEMENTS COMPIN Société Anonyme dite:, 40, Boulevard Malesherbes, F-75008 Paris (FR)**

(72) Inventeur: **Danton, Jean-Louis, 8, Rue Gambetta, F-92100 Boulogne (FR)**

(74) Mandataire: **Jolly, Jean-Pierre et al, Cabinet BROT et JOLLY 83, rue d'Amsterdam, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

# Description

La présente invention concerne un nouveau support de siège pour véhicule de transport en commun. Elle concerne également les sièges équipés de ce support.

On utilise dans certains cas, dans des véhicules de transport en commun, des sièges dépourvus de piètement et supportés par une ossature fixée en porte à faux sur la cloison ou la paroi contiguë. En raison de cette position de porte à faux, on désigne habituellement ces sièges, dans la technique, par le terme anglais de sièges «cantilever».

Le principal avantage des sièges de ce type réside dans le fait que l'absence de pieds facilite l'entretien des véhicules, mais l'ossature des supports en porte à faux est généralement complexe et, comme ils sollicitent fortement la paroi sur laquelle ils sont fixés, il est généralement nécessaire de renforcer la paroi du véhicule afin de lui permettre de résister à l'effort transmis par le support du siège amplifié par l'effet de bras de levier, ou de prévoir, à défaut d'un piètement complet, une tige d'appui verticale qui rattrape le porte à faux. Il est à noter que ce renforcement de la paroi du véhicule est onéreux et que, pour arriver à une résistance équivalant à celle d'un piètement, il est nécessaire d'augmenter les sections et donc le poids dudit support dans des proportions très importantes.

La présente invention vise à éviter ces inconvénients des sièges «cantilever» en proposant un siège de ce type dont le support, fixé en porte à faux sur une paroi latérale du véhicule, ne sollicite que modérément cette paroi et ne nécessite donc pas l'emploi d'un appui vertical pour rattraper l'effort du porte à faux.

A cet effet, l'invention a pour objet un support de siège pour véhicule de transport en commun, destiné à être fixé en porte à faux sur une paroi de ce véhicule, caractérisé en ce que l'ossature de ce support, en coupe par un plan vertical perpendiculaire à ladite cloison, a une section transversale en forme générale de C, la branche supérieure du C étant destinée à servir d'assise au siège, tandis que sa branche inférieure reposera sur le plancher du véhicule et en sera solidaire, la partie verticale réunissant lesdites branches étant apte à prendre appui contre une paroi latérale du véhicule et à être rendue solidaire de celle-ci.

La branche verticale et la branche inférieure horizontale pourront être constituées de telle façon que:

1) Elles constituent la paroi ou le plancher du véhicule.

2) Compte tenu de l'encombrement des sièges mis en ligne dans un véhicule, l'effort de maintien du support horizontal supérieur soit réparti sur la plus grande surface possible.

3) Leurs dimensions correspondent à un module de construction du véhicule.

4) Elles permettent d'intégrer ou de remplacer les gaines servant au chauffage ou au passage des différentes canalisations sur le véhicule.

Les branches inférieure et supérieure du C pourront avoir des dimensions identiques ou non. La branche supérieure pourra servir d'assise à un, deux, voire trois sièges contigus et, dans le cas de plusieurs sièges reposant sur le même support, la branche supérieure du C pourra, bien entendu, être nettement plus longue que la branche inférieure.

La résultante exprimée en kilogrammes d'un effort exercé sur la branche supérieure horizontale, sur les autres branches du C, sera donc inversement proportionnelle à la surface de celles-ci. Il sera possible en augmentant cette surface d'éviter un renforcement de la paroi du véhicule. Il pourra cependant être nécessaire, en particulier dans le cas de plusieurs sièges contigus reposant sur le même support, d'équiper ce dernier d'une jambe de force interposée entre la branche supérieure du C et la base de la partie verticale. La partie supérieure de cette jambe de force pourra être disposée au-dessous de l'extrémité de la branche supérieure du C ou en tout autre emplacement de celle-ci, notamment en sa partie médiane. La tranche supérieure de la jambe de force pourra avantageusement être engagée dans une rainure ménagée dans la face inférieure de la branche supérieure du C, parallèlement à la cloison. Elle pourra avoir toute forme désirée mais, de préférence, tant pour des raisons esthétiques que d'encombrement, on pourra lui donner la forme d'un triangle incurvé dont la pointe inférieure prendra appui contre la portion de raccordement de la branche inférieure du support et de la partie verticale, en sa partie médiane. Cette jambe de force ne gênera donc nullement, du fait de sa position, les opérations de nettoyage ou d'entretien de la voiture de transport en commun équipée de sièges munis de ce support.

Les sièges pour véhicule de transport en commun comprenant un support du type de celui qui vient d'être défini constituent bien entendu un autre objet de la présente invention.

Les dessins schématiques annexés illustrent diverses formes de mise en œuvre de l'invention. Sur ces dessins:

la figure 1 est une vue en perspective du support conforme à l'invention;

la figure 2 est une coupe verticale de ce support, parallèlement à la paroi à laquelle il est attenant, avec un siège prenant appui sur sa partie supérieure;

la figure 3 est une vue en perspective d'une autre forme de réalisation du support de siège, et montrant une variante du pied de force;

les figures 4 à 6 montrent encore d'autres formes de supports qui s'intègrent dans la paroi latérale et le plancher du véhicule; et

la figure 7 montre une autre forme de réalisation du support qui permet d'intégrer différentes canalisations.

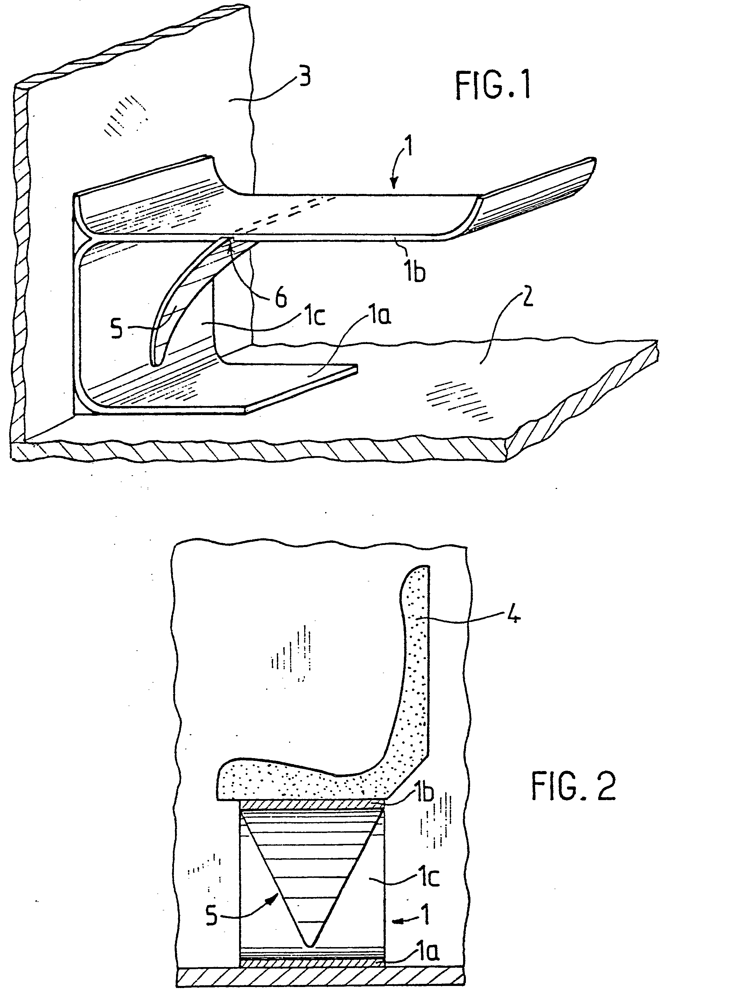

Le support de siège 1 représenté sur la figure 1 a une structure monobloc, mais il pourrait bien entendu être constitué de plusieurs pièces assemblées rigidement entre elles. En coupe verticale par un plan perpendiculaire au plancher 2 de la voiture de transport en commun et aux parois latérales 3 de celle-ci, ce support présente un profil en C, dont la branche inférieure 1a repose sur le plancher et est solidaire de celui-ci, tandis que la branche supérieure 1*b*, à section en U ouvert vers le haut, sert d'assise au siège 4, la partie 1*c* qui réunit les parties 1*a* et 1*b* étant au contact de la paroi 3 et fixée sur celle-ci. Les parties 1*a* et 1*c* pourront être rendues solidaires respectivement du plancher 2 et de la paroi 3 par tout moyen connu dans la technique. La partie 1*a* pourra être fixée directement sur le plancher métallique de la voiture et remplacer localement le revêtement de bois ou d'un autre matériau qui recouvre ce plancher, de manière à s'intégrer parfaitement dans la face supérieure de ce plancher que voit le voyageur.

Dans le cas de la figure 1, le support 1 est destiné à recevoir un siège double. La partie supérieure 1*b* qui sert d'assise au siège est plus longue que la partie inférieure 1*a* qui prend appui sur le plancher.

Comme l'ossature du support prend appui sur le sol par une large surface, le support sollicite beaucoup moins la paroi latérale 3 que dans la technique antérieure et il n'est donc pas nécessaire de prévoir une tige verticale de renfort au-dessous de la partie supérieure 1*b* en porte à faux. Si nécessaire, en particulier si la partie supérieure 1*b* a une grande longueur (cas d'un siège double), on pourra prévoir sous cette partie une jambe de force 5, dirigée en oblique vers la base de la partie verticale 1*c* du support et prenant appui contre la partie de raccordement des parties 1*a* et 1*c*. Cette jambe de force 5 pourra avoir toute forme appropriée, mais, avantageusement, on pourra lui donner la forme d'un triangle curviligne incliné, comme représenté sur les dessins, une pointe du triangle prenant appui sur l'angle inférieur du support, tandis que sa partie supérieure est engagée dans une rainure 6 ménagée dans la face inférieure de la partie 1*b*. La partie supérieure de la jambe de force 5 pourra être disposée au-dessous de l'extrémité libre de la partie 1*b* ou en toute position intermédiaire.

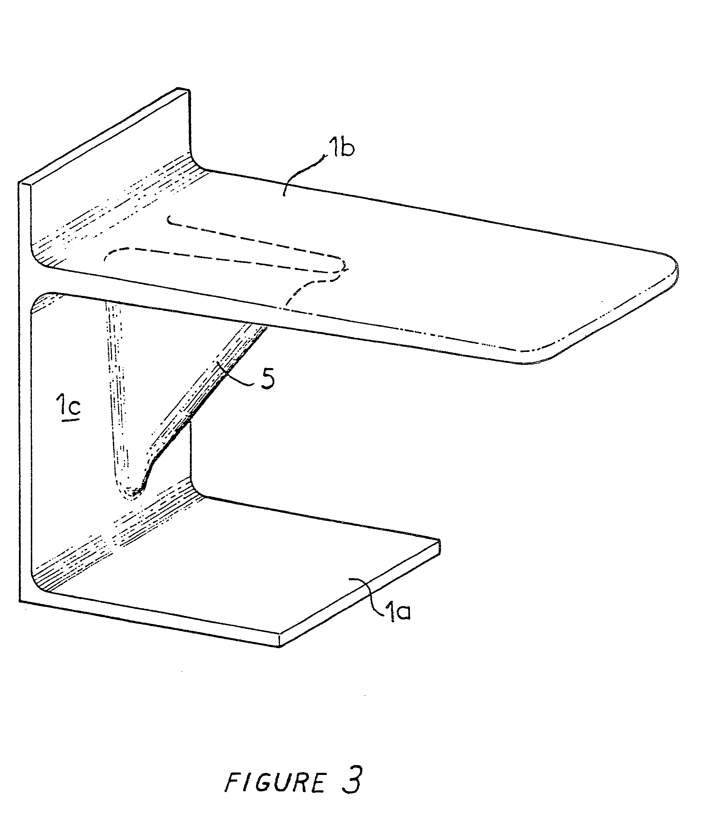

Comme le montre la figure 3, la jambe de force 5 peut également être en forme de triangle rectangle et disposée dans le plan médian qui passe par les axes médiateurs des branches 1*a*, 1*b* et 1*c*. Les deux côtés de l'angle droit de la jambe de force étant respectivement fixés sur la partie verticale 1*c* et sous la branche supérieure 1*b*.

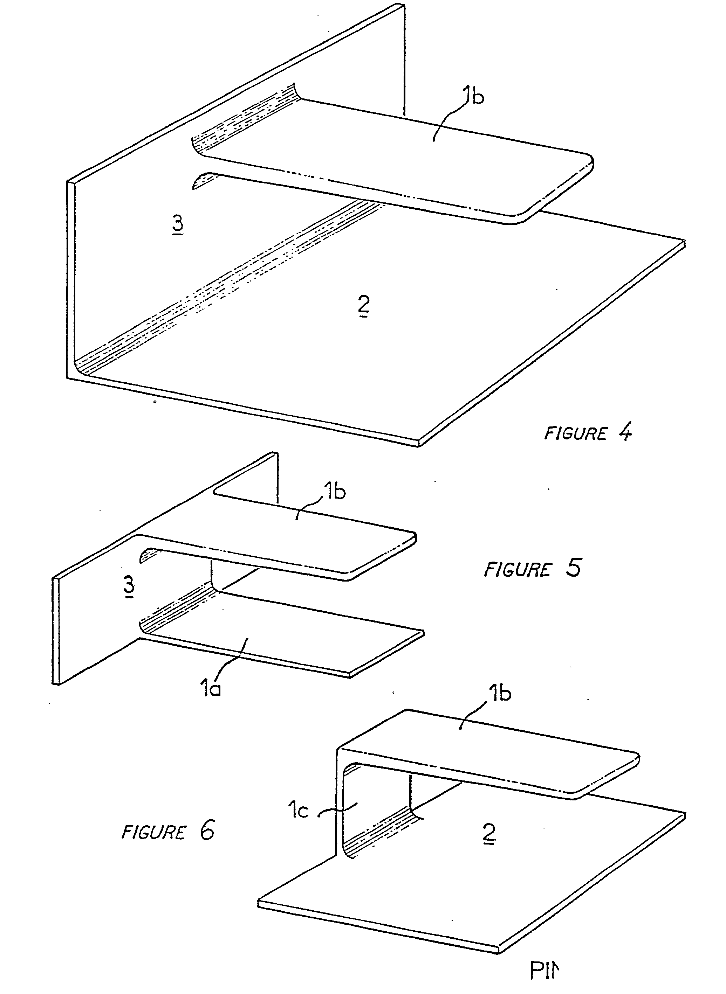

Les figures 4, 5 et 6 montrent d'autres formes de réalisation où les branches du support s'intègrent aux parois de la voiture. Ainsi, dans le support de la figure 4, la branche inférieure est intégrée au plancher 2 de la branche centrale à la paroi latérale 3. Dans celui de la figure 5, les branches inférieure 1*a* et supérieure 1*b* font corps avec la paroi latérale 3, et dans le mode de réalisation de la figure 6, la branche centrale 1*c* fait corps avec le plancher 2. Sur ces trois figures, on constate que les différentes branches sont d'inégales largeurs.

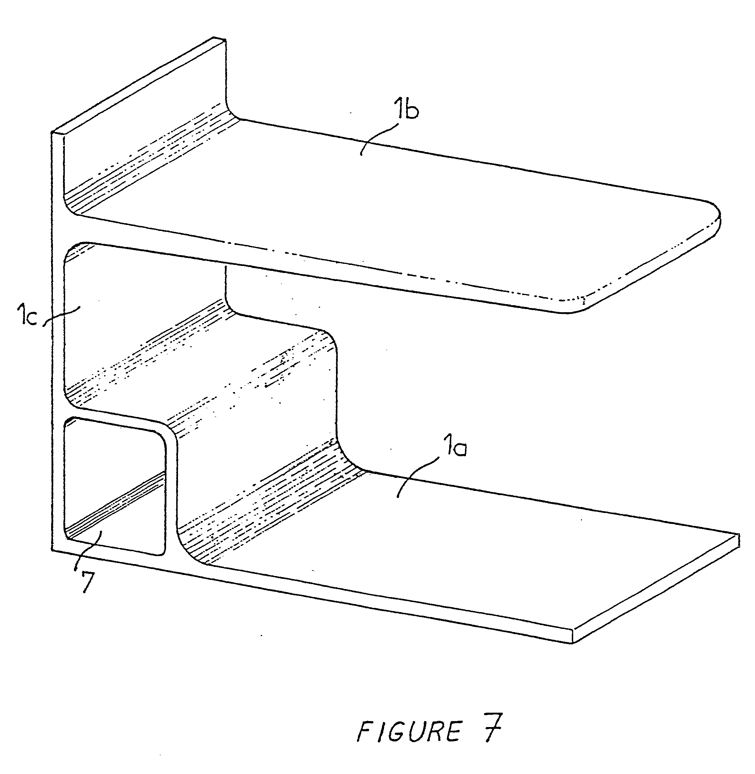

Dans le mode de réalisation de la figure 7, une gaine 7 est formée dans l'encoignure des branches inférieure 1*a* et centrale 1*c* pour le passage des canalisations de chauffage et de différentes tuyauteries.

Le support conforme à l'invention est donc d'une conception très simple. Il se prête à une fabrication et à un montage aisés dans les voitures de transport en commun et, malgré sa structure en porte à faux, il ne sollicite pas excessivement les parois latérales des voitures sur lesquelles il est appelé à être fixé et n'implique donc pas l'utilisation de renforts peu pratiques et inesthétiques.

**Revendications**

1. Support de siège pour véhicule de transport en commun, destiné à être fixé en porte à faux sur une paroi latérale (3) de ce véhicule, caractérisé en ce que l'ossature (1) de ce support, en coupe par un plan vertical perpendiculaire à ladite paroi, a une section transversale en forme générale de C, la branche supérieure (1*b*) du C étant destinée à servir d'assise à un siège (4), tandis que sa branche inférieure (1*a*) repose sur le plancher (2) du véhicule et en est solidaire, la partie verticale (1*c*) réunissant lesdites branches étant apte à prendre appui contre ladite paroi latérale (3) du véhicule et à être rendue solidaire de celle-ci.

2. Support selon la revendication 1, caractérisé en ce que la branche inférieure (1*a*) et la branche supérieure (1*b*) de la structure en C ont la même longueur.

3. Support selon la revendication 1, caractérisé en ce que la branche (1*a*) et la branche supérieure (1*b*) de la structure en C ont une longueur différente.

4. Support selon la revendication 1, caractérisé en ce que la branche horizontale inférieure (1*a*) et la partie verticale (1*c*) ont des largeurs différentes de celle de la branche supérieure (1*b*).

5. Support selon l'une des revendications 1 à 4, caractérisé en ce que les branches horizontales inférieure (1*a*) et verticale (1*c*) constituent des modules et prennent la place soit de la paroi, soit du plancher dans la construction du véhicule.

6. Support selon l'une des revendications 1 à 4, caractérisé en ce que les branches horizontales inférieure (1*a*) et verticale (1*c*) sont réalisées de telle façon qu'elles permettent d'intégrer et de remplacer les gaines (7) servant au chauffage ou au passage des différentes canalisations montées sur le véhicule.

7. Support selon l'une des revendications 1 à 6, caractérisé en ce qu'il comprend une jambe de force (5) interposée obliquement entre la face inférieure de la branche supérieure (1*b*) et la base de la partie verticale (1*c*).

8. Support selon la revendication 7, caractérisé en ce que la partie supérieure de ladite jambe de force (5) est disposée au-dessous de la partie médiane de ladite branche supérieure (1*b*).

9. Support selon l'une des revendications 7 et 8, caractérisé en ce que la partie supérieure de ladite jambe de force (5) est engagée dans une rainure (6) de la face inférieure de ladite branche supérieure (1*b*).

10. Support selon l'une des revendications 1 à 9, caractérisé en ce que ladite jambe de force (5) a la forme d'un triangle curviligne dont la pointe est dirigée vers le bas.

11. Siège pour véhicule de transport en commun, caractérisé en ce qu'il comprend un support selon l'une des revendications 1 à 10.

**Patentansprüche**

1. Fahrgastsitzstütze für öffentliche Verkehrsmittel, welche dafür bestimmt ist, an einer Seitenwand (3) dieses Fahrzeuges vorragend fixiert zu werden, dadurch gekennzeichnet, dass das Gerüst (1) dieser Stütze in einem vertikalen, senkrecht auf die Wand stehenden Schnitt, einen im wesentlichen einem C gleichenden Querschnitt aufweist, wobei der obere Abschnitt (1b) des C als Stütze eines Sitzes (4) dient, wohingegen der untere Abschnitt (1a) auf dem Boden des Fahrzeuges ruht und mit diesem gemeinsam ausgebildet ist, der senkrechte Teil (1c), welcher die besagten Abschnitte miteinander vereinigt, kann gegen die Seitenwand (3) des Fahrzeuges abgestützt und mit dieser gemeinsam ausgebildet werden.

2. Sitzstütze nach Anspruch 1, dadurch gekennzeichnet, dass der untere Abschnitt (1a) und der obere Abschnitt (1b) der C-förmigen Struktur die gleiche Länge aufweisen.

3. Sitzstütze nach Anspruch 1, dadurch gekennzeichnet, dass der untere Abschnitt (1a) und der obere Abschnitt (1b) der C-förmigen Struktur eine unterschiedliche Länge aufweisen.

4. Sitzstütze nach Anspruch 1, dadurch gekennzeichnet, dass der horizontale untere Abschnitt (1a) und der vertikale Teil (1c) eine von dem oberen Abschnitt (1b) verschiedene Breite aufweisen.

5. Sitzstütze nach einem der Ansprüche 1 bis 4, dadurch gekennzeichnet, dass der untere horizontale (1a) und der vertikale Abschnitt (1c) Teile bilden, welche entweder an der Wand oder am Boden der Konstruktion des Fahrzeuges angeordnet sind.

6. Sitzstütze nach einem der Ansprüche 1 bis 4, dadurch gekennzeichnet, dass der untere horizontale (1a) und der vertikale Abschnitt (1c) derart ausgebildet sind, dass der Einbau und der Ersatz der für die Heizung oder das Durchführen von verschiedenen auf dem Fahrzeug montierten Leitungen vorgesehenen Umhüllungen (7) ermöglicht wird.

7. Sitzstütze nach einem der Ansprüche 1 bis 6, dadurch gekennzeichnet, dass eine Stütze (5) vorgesehen ist, welche schräg zwischen der unteren Fläche des oberen Abschnittes (1b) und der Basis des senkrechten Teiles (1c) eingesetzt ist.

8. Sitzstütze nach Anspruch 7, dadurch gekennzeichnet, dass der obere Teil der Stütze (5) unter dem mittleren Teil des oberen Abschnittes (1b) angeordnet ist.

9. Sitzstütze nach einem der Ansprüche 7 oder 8, dadurch gekennzeichnet, dass der obere Teil der Stütze (5) in einem Einschnitt (6) der unteren Fläche des oberen Abschnittes (1b) eingesetzt ist.

10. Sitzstütze nach einem der Ansprüche 1 bis 9, dadurch gekennzeichnet, dass die Stütze (5) die Form eines gebogenen Dreiecks, dessen Spitze nach unten zeigt, aufweist.

11. Sitz für öffentliche Verkehrsmittel, dadurch gekennzeichnet, dass er eine Sitzstütze nach einem der Ansprüche 1 bis 10 aufweist.

**Claims**

1. Seat support for a public transport vehicle, designed to be fixed in an overhanging manner on a side wall (3) of this vehicle, characterized in that the frame (1) of this support, in section through a vertical plane perpendicular to this wall, has a generally C-shaped cross-section, the upper member (1b) of the C being designed to act as a support for a seat (4), while its lower member (1a) rests on the floor (2) of the vehicle and is rigid therewith, the vertical portion (1c) connecting these members being suitable to bear against the side wall (3) of the vehicle and to be made rigid therewith.

2. Support as claimed in Claim 1, characterized in that the lower member (1a) and the upper member (1b) of the C-shaped structure have the same length.

3. Support as claimed in Claim 1, characterized in that the lower member (1a) and the upper member (1b) of the C-shaped structure have a different length.

4. Support as claimed in Claim 1, characterized in that the lower horizontal member (1a) and the vertical portion (1c) have widths differing from that of the upper member (1b).

5. Support as claimed in one of Claims 1 to 4, characterized in that the lower horizontal and central members (1a, 1c) form modules and take the place either of the wall or of the floor in the construction of the vehicle.

6. Support as claimed in one of Claims 1 to 4, characterized in that the lower horizontal and vertical members (1a, 1c) are formed such that they make it possible to supplement and replace the conduits (7) designed for heating or for the passage of the various tubings installed in the vehicle.

7. Support as claimed in one of Claims 1 to 6, characterized in that it comprises a strut (5) interposed obliquely between the lower surface of the upper member (1b) and the base of the vertical portion (1c).

8. Support as claimed in Claim 7, characterized in that the upper portion of the strut (5) is disposed below the median portion of the upper member (1b).

9. Support as claimed in one of Claims 7 and 8, characterized in that the upper portion of the strut (5) is engaged in a groove (6) in the lower surface of the upper member (1b).

10. Support as claimed in one of Claims 1 to 9, characterized in that the strut (5) is shaped as a curved triangle whose apex is downwardly orientated.

11. Seat for public transport vehicles, characterized in that it comprises a support as claimed in one of Claims 1 to 10.

0 222 632

FIG.1

FIG. 2

5

FIGURE 3

FIGURE 4

FIGURE 5

FIGURE 6

PIN

1b

1c

1a

7

FIGURE 7